**Europäisches Patentamt**

(19) **European Patent Office**

**Office européen des brevets**

(11) Publication number : **0 317 164 B1**

(12) # EUROPEAN PATENT SPECIFICATION

(45) Date of publication of patent specification :
**10.06.92 Bulletin 92/24**

(51) Int. Cl.⁵ : **F16H 7/08**

(21) Application number : **88310538.9**

(22) Date of filing : **09.11.88**

(54) **Tensioner for a chain, a belt or the like.**

The file contains technical information
submitted after the application was filed and
not included in this specification

(30) Priority : **09.11.87 JP 282648/87**
**31.08.88 JP 216794/88**
**31.08.88 JP 216796/88**
**31.08.88 JP 216797/88**
**31.08.88 JP 216798/88**

(43) Date of publication of application :
**24.05.89 Bulletin 89/21**

(45) Publication of the grant of the patent :
**10.06.92 Bulletin 92/24**

(84) Designated Contracting States :
**DE FR GB IT SE**

(56) References cited :
**GB-A- 2 191 559**
**JP-A-62 115 554**
**JP-U-62 115 554**

(56) References cited :
**PATENT ABSTRACTS OF JAPAN, vol. 11, no.
98 (M-575)[2545], 27th March 1987; & JP-A-61
248 951 (NHK SPRING CO., LTD)06-11-1986
PATENT ABSTRACTS OF JAPAN, vol. 11, no.
98 (M-575)[2545], 27th March 1987; & JP-A-61
248 950 (NHK SPRING CO., LTD)06-11-1986**

(73) Proprietor : **NHK SPRING CO., Ltd.**
**1 Shinisogo-cho, Isogo-ku**
**Yokohama-shi (JP)**

(72) Inventor : **Ojima, Juji NHG Spring Company
Limited
4056, Nakatsu Aza Sakuradai Aikawa-machi
Aiko-gun Kanagawa-ken (JP)**
Inventor : **Ishii, Kazuo c/o Ina Kojo
NHK Spring Company Limited 3131,
Miyata-mura
Kami Ina-gun Nagano-ken (JP)**
Inventor : **Numakura, Fumio c/o Ina Kojo
NHK Spring Company Limited 3131,
Miyata-mura
Kami Ina-gun Nagano-ken (JP)**

(74) Representative : **Senior, Alan Murray et al
J.A. KEMP & CO 14 South Square Gray's Inn
London WC1R 5EU (GB)**

EP 0 317 164 B1

## Description

This invention relates to a tensioner for tensioning, for instance, a chain or a timing belt which drives a camshaft of an engine. When the chain or belt is slackened due to elongation or wear, the tensioner works to maintain a constant tension in it by pressing directly or indirectly.

In Figure 19, a tensioner is shown which is disclosed in GB-A 2191559 wherein the threaded portion of the front half of rotational member 2 is engaged with the threaded portion of tension member 3. On the rear half of rotational member 2, a torsional spring 4 is inserted externally. The front end 4a of torsional spring 4 is inserted in a groove 1a of casing 1 and the other hook end 4b is inserted in a slit formed on the rear end of rotational member 2 so as to drive the rotational member 2. The tension member 3 is supported by a bearing 5 formed on the open end of the casing and its front end is covered with a cap 6. The supported portion of tension member 3 has two parallel portions radially opposite each other so that the rotational motion of the tension member may be constrained so that it is therefore urged in an axial direction. The cap 6 tensions a chain or belt constantly since the tension member 3 is urged by the rotational member 2. Numeral 7 indicates a flexible boot for covering the open end of casing 1. Numeral 8 indicates a seal bolt screwed in the rear end of casing 1. The boot 7 and the seal bolt 8 are used to prevent both the penetration of dust or unwanted objects into the casing and also the leakage of lubricant out of casing 1.

In this type of tensioner, the front half of the rotational member 2 is engaged with the tension member 3 and the torsion spring 4 is located around the rear half of the rotational member. Accordingly the length of the rotational member defines the length of the whole tensioner, which is required to be as small as possible.

In order to reduce the dimensional size of the tensioner, Japanese Utility Model Application laid-open 62-115554 disclosed the features of the first part of claim 1 hereto . A rotational cylinder, a tension member and a torsion spring are overlapped so as to reduce the whole length of the tensioner. As before, the tension member is urged by the rotational member which is driven by the torsion spring. However, in this case, the tension member has a male thread which is threaded in a female thread of the rotational cylinder. The rotation of the tension member is constrained by two radially opposite parallel portions of an unthreaded length of the tension member. The tension member can be urged until the round male threaded portion of the tension member meets the non-circular portion of a bearing through which the parallel portion of the member travels. In this type of tensioner, the urging stroke of the tensioner is constrained by the length of the unthreaded parallel portion of the tension member since the threaded portion of the tension member ultimately meets the non-circular bearing.

The present invention aims to provide a tensioner for a chain or belt which satisfies the requirement of tensioners to be small while allowing a large stroke.

According to the invention there is provided a tensioner for a chain, a belt or the like comprising a casing, a tension member threadedly engaged with a rotational member and extending through a non-circular bearing in said casing, a torsion spring to urge the rotation of said rotational member and thereby urge the tension member outwardly of said casing, and externally surrounding said rotational member, there being a zone surrounded by the torsion spring where the tension and rotation members are threadedly engaged when the tension member is withdrawn into the housing, the exterior of the tension member being of non-circular form corresponding to the non-circular form of said bearing, characterised in that a male thread on the rotational member engages with a female thread in the tension member, and in that the non-circular form of the tension member extends substantially throughout its length, so that the available stroke of the tension member through the bearing may be substantially as much as the length of the tension member within the housing when the tension member is withdrawn into the housing, and in that the tension member is substantially removed from the said zone when it is fully extended from the housing.

The invention will be better understood from the following description which is given by way of example only with reference to the accompanying drawings in which:

Figure 1, 2 and 3 show a sectional view, left side view and right side view of an embodiment according to the present invention respectively. Figure 4 (a), (b) and (c) show a sectional view, left side view and right side view of a tension member respectively. Figure 5 shows a partial sectional view of a casing. Figure 6 (a) and (b) show a front view and side view of a bearing. Figure 7 (a) to (d) show front views of various types of tension member. Figure 8 (a) and (b) show a side view and amplified sectional view of another embodiment. Figure 9 (a) and (b) show a sectional view and front view of the rear bearing respectively. Figure 10 to 12 show sectional views (a) and plan views (b) of holders respectively. Figure 13 (a) and (b) show a plan view and side view of another type of bearing. Figure 14 (a) and (b) show a plan view and a side view of a type of spacer. Figure 15 and 16 show a perspective view and a sectional view of a spacer mounted on the head of casing. Figure 17 shows a sectional view of another embodiment. Figure 18 (a), (b) and (c) show a sectional view, plan view and side view of another type of rear bearing. Figure 19 shows a partial sectional view of a conventional tensioner.

Hereinafter an embodiment according to the present invention will be explained referring to the drawings.

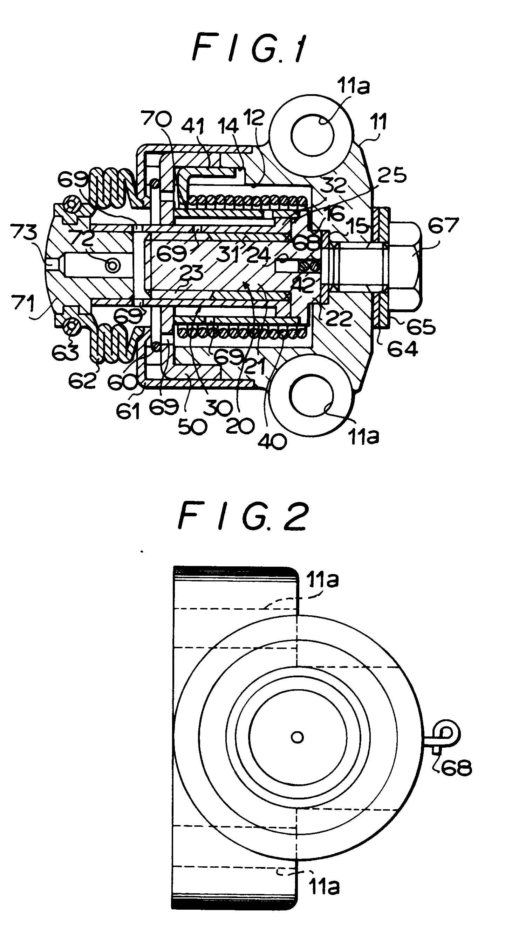

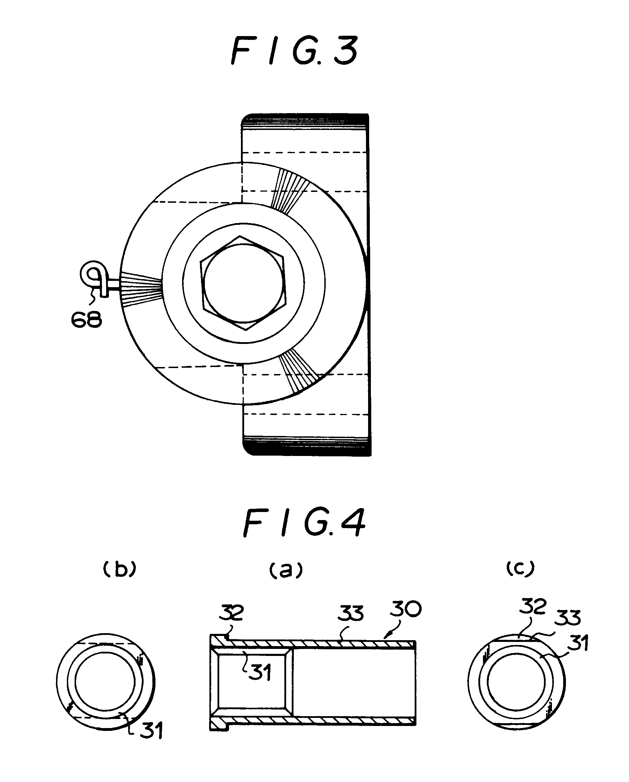

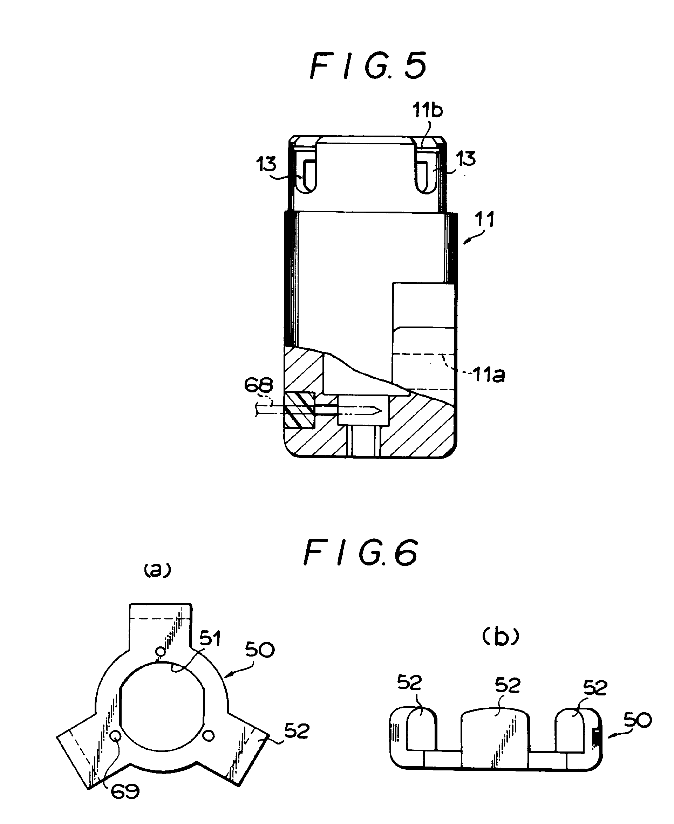

Figure 1 shows a sectional view of an embodiment of the invention. Figure 2 and 3 show a left side view and right side view respectively. A casing 11 is provided with mounting holes 11a and a housing 12, wherein the threaded portion 23 of a rotational member (male screw member) 20 is engaged with the threaded portion of a tension member (female screw member) 30 and a torsion spring 40 is overlapped coaxially and radially to form a three layered structure. The threaded portion 23 of the rotational member 20 is engaged with the inner threaded portion extending almost the whole length of tension member 30. A rear shaft portion 22 of the rotational member 20 is supported rotatably together with a washer 15 by a bearing 16 formed on the rear end of the casing 11. A bearing 50 is mounted on the front end of casing 11, which is formed as shown in the Figure 6. A non-circular hole 51 is formed in the center of bearing 50, into which the tension member 30 is inserted. The ear formed engaging pieces are folded by 90° as indicated with numeral 52 in Figure 6 (a) and are inserted into slits 13 formed on the front end of casing 11 so as to fix the bearing 50 on the casing 11. The ear portions of the bearing 50 may also protrude without being bent, but in this case, it is preferable to have enough thickness in the bearing 50 so as to alleviate the pressure of the casing on it. The number of the engaging piece 52 is not limited to 3 even though 3 are illustrated in Figure 6. If there are more engaging pieces, the torque of torsion spring 40 can be adjusted more easily. For example, where there are 6 engaging pieces 52, the adjustment work will be much easier than where there are only 3 engaging pieces. The non-circular hole 51 on the bearing 50 comprises two parallel portions radially opposite one another and into which the tension member is inserted so as to slide and not to rotate. The mating portion of the tension member has an identical cross-section along almost its whole length. Accordingly, sufficient length of stroke can be ensured for the tension member 30. A flange portion 32, formed on the rear end of tension member 30, abuts on the bearing 50 so as not to go right through. A torsion spring 40 is inserted externally on the tension member 30. The hook portion 41 of the torsion spring is inserted into the groove 12 on the casing 11 and the other end 42 of the torsion spring is inserted in the slits 24 formed on the rear shaft 22 of the rotational member 20. Then the rotational member 20 can be rotated by the torsion spring 40, and accordingly the tension member 30 can be urged axially. In this type of construction comprising the rotational member 20 engaged with the tension member 30 and inserted in the torsion spring 40, an axial length, that is with the tension member 30 withdrawn, can be reduced permitting the reduced size requirement of device. In addition, the tension member 30 is coaxially engaged with the rotational member 20 dispensing an independent bearing length in the housing 12 of casing 11 for supporting the tension member 30 and permitting axial short design of device.

A collar 70 is inserted between the tension member 30 and the coil portion of the torsion spring 40, preventing the penetration of the coil portion of the torsion spring into the tension member 30, thereby to smooth the movement of the tension member 30 in the axial direction. The rear end of collar 70 is inserted on the collar seat 25 of the flange portion of the rotational member 20 and its front end abuts the bearing 50.

The tension member 30 is covered with a cap 71 for tensioning a belt directly or indirectly. Numeral 72 indicates a spring pin pressed into the tension member 30 so as to fix said head 71 on the tension member 30.

In Figure 1, numeral 60 indicates a snap ring inserted on the front end of casing 11 so as to prevent the bearing 50 falling out. Numeral 61 indicates a cover for the front portion of casing 11. Numeral 62 indicates a boot for covering the front end of casing 11. Numeral 63 indicates a snape ring for securing said boot 62. A seal bolt 67 is screwed in the rear end of the casing together with a washer 65 and a gasket (seal plate) 64. Numeral 68 indicates a stopper pin detachably inserted from outside in the casing 11 of which a point reaches the slit 24 formed on the rear end of the rotational member 20. The rotational member 20 is locked by this stopper pin 68.

The present belt tensioner is used in an air atmosphere environment with a lubricant in the casing. In order to keep the tensioner well lubricated, there are adequate orifices 69 in the tension member 30, the bearing 50 and the collar 70 to allow lubricant circulation. These orifices may be substituted with notched portions formed on the collar 70. In this case, a vent 73 is formed in the cap 71 so as to correspond with the volumetrical variation due to the movement of the tension member 30 in the space formed by the boot 62 and the casing 11. The tensioner shown in Figure 1 is used in a vertical position maintaining the cap 71 on the upperside so as not to occur leakage of lubricant. The vent 73 may be substituted with the hole for inserting the stopper pin 68 when the tensioner is in use.

In the embodiment shown in Figure 5, the tensioner is used whilst keeping the hole for inserting stopper pin 68 on the upperside so as not to occur leakage of lubricant.

Hereinafter, the construction of another embodiment will be explained. The tension member 30, engaged with the rotational member 20, and the collar 70, located around the tension member 30, are inserted in the torsion spring 40. Then the rear hook portion 42 of the torsion spring 40 is inserted in the slit 24 formed on the rear end of the rotational member 20. The cap 71 is put on the front end of the tension member 30. Then the bearing 50 is put on the tension member 30, thus completing a subassembly. Next, the subassembly is inserted in the casing 11. The shaft portion 22 of the rotational member 20 is inserted in the bearing 16 of casing 11. Then, the subassembly can be secured in the casing with the snap ring 60 inserted in the ring groove 11b as shown in Figure 5. Cover 61, fixed with the boot 62, is fitted or glued on the casing and the front end of the boot 62 is secured on the head 71 with snap ring 63. The rotational member 20 can be wound by driving the rear slit 24 with a tool and then the rotation of rotational member 20 can be locked by inserting stopper pin 68 into the slit 24. After applying lubricant in the casing, the tensioner is sealed with seal bolt 67.

Then the tensioner is ready to be used and, after being mounted on the equipment, the stopper pin is taken out so that the cap of the tension member advances to abut a chain or belt.

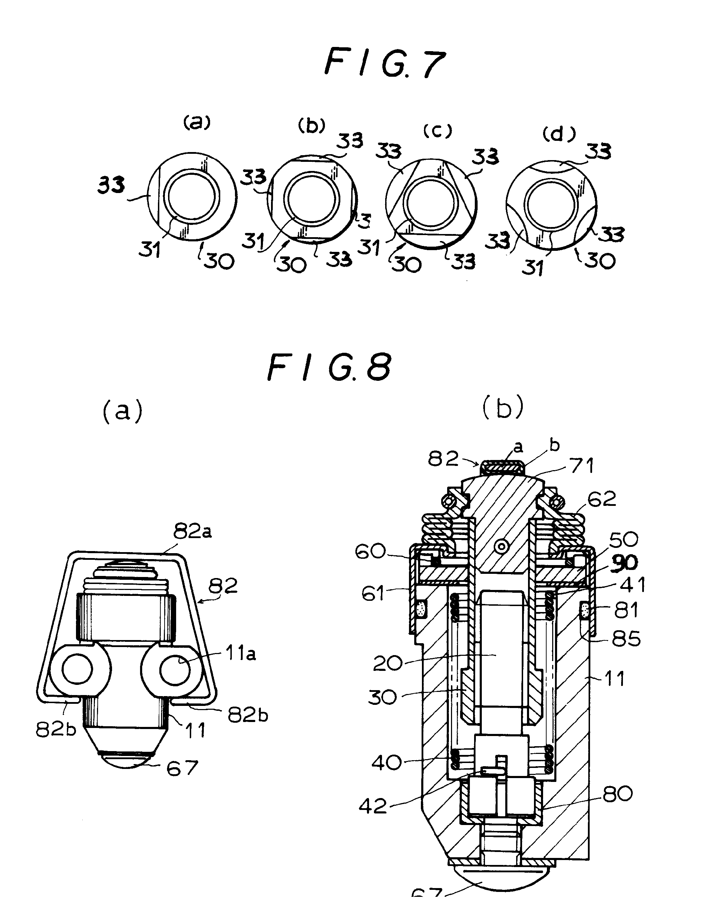

Figure 7 shows front views of various tension members 30. One side of cylinder portion 33 is cut off straight as shown in the Figure 7 (a). Four opposite sides of cylinder portion 33 are cut off straight as shown in (b). Three sides with angular difference of 120° are cut off straight as shown in (c). Three sides of cylinder portion 33 are cut off in arc form in the same way shown in Figure 7 (d). The cylinder portion 33 may also be formed in other shapes. In these cases, the through hole formed in the bearing has to correspond to said cylinder portions 33.

When the tensioner is used on the engine of a motorcycle, the whole tensioner is used in the environment already well lubricated and accordingly it is not necessary to be lubricated again, dispensing with the boot and automatically enabling reduction of the whole length of tensioner.

Figure 8 (a) and (b) show another embodiment according to the present invention.

In this case all identical numerals shown above will be omitted.

The shaft portion of rotational member 20 is supported by a rear bearing 80 in place of washer 15 in the Figure 1. There is not a collar 70 as shown in the Figure 1. The cap 71 is solid without an air vent 73. The gap between cover 61 and casing 11 is sealed with an "O" ring 81. A holder 82 is used in the place of stopper pin 68 in the Figure 1. A spacer 90 is mounted between the bearing 50 and casing 11. The rotational member 20 is inserted in the tension member 30 and the tension member is mounted in the torsion spring 40.

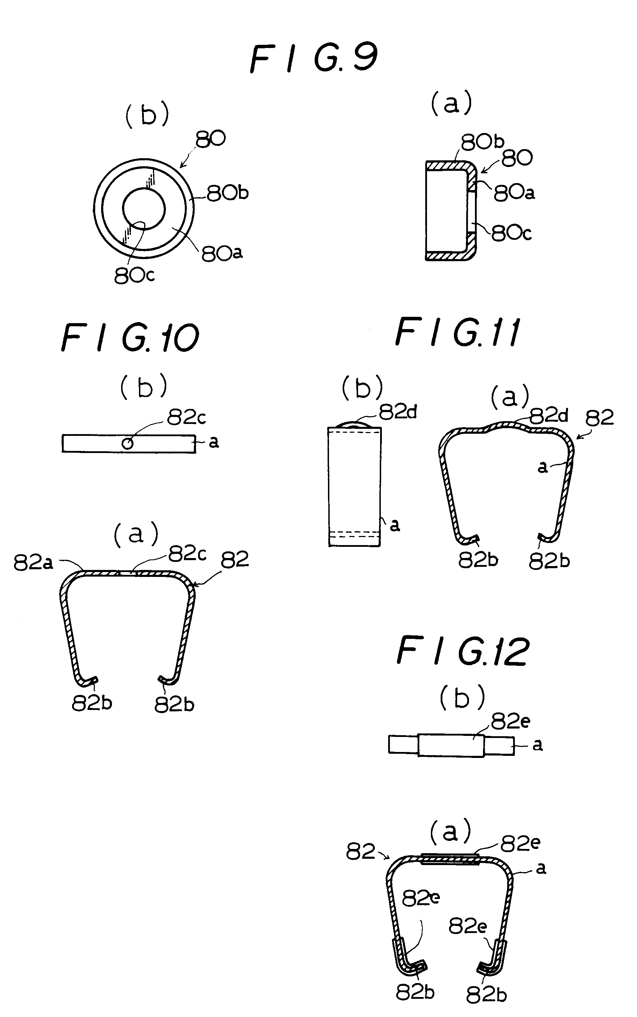

The rear bearing 80 is made of a hard material in cup form as shown with 80, 80a and 80b in the Figure 9 (a) and (b). The outer diameter of cylinder portion 80b is of such dimension that it may be fitted in to a recess formed in the casing 11. The inner diameter of the cylinder portion 80b is of such dimension that the shaft portion of rotational member 20 may be fitted rotatably in it. In the center of the rear bearing, a through hole 80c is formed so as to be used to wind the torsion spring 40. Accordingly the casing can be made of a light material such as aluminum, aluminum alloy or aa synthetic resin. In this way, a reduction of weight can be realized. The bearing 80 has more bearing area, therefore it works more stably. The bearing 80 is an independent component and can be made easier than that of casing.

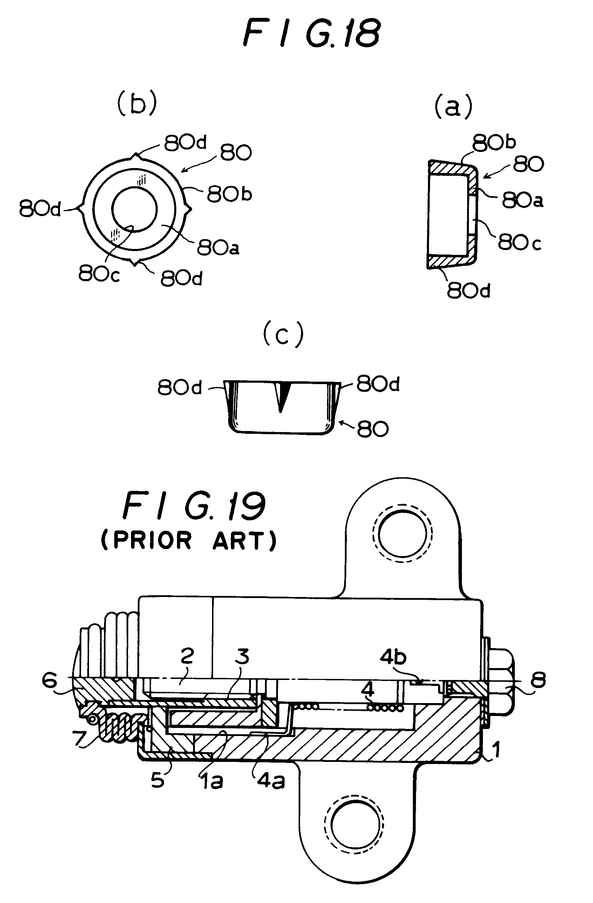

The bearing 80 can be made so as to comprise protrusions 80d on the cylinder portion 80b (Figure 18). The outer diameter of cylinder portion 80b may be tapered to the bottom 80a. In this case, when the bearing 80 is pressed in said recess of casing 11, the outer wall bites the inner wall of the recess. At least one protrusion is sufficient for the tensioner.

The cover 61 is sealed on the casing 11 by seal ring 81. The "O" ring 81 is made of elastic material closing the gap formed by a circumferential groove 85 at the casing and the inner wall of cover 61 so as to prevent the penetration of dust or leakage of lubricant. In this case, the cover 61 may be made with rather less accuracy because of the "O" ring 81, improving productivity of the component.

The holder 82 comprises a leaf spring "a" coated with synthetic resin "b", wherein the central portion 82a abuts on the cap 71 and both hook ends 82b are secured on the outer base portions of mounting holes 11a. The plastic coating of holder 82 works to prevent slippage against the cap 71. The contact point of cap 71 has a round portion for preventing slippage even though it is dislocated due to different strokes.

Figure 10 to 12 show other types of holder 82 which comprise a leaf spring "a" having a hole 82c or a hollow portion 82d for being fitted by a protrusion formed on the cap 71. Figure 12 shows a holder having plastic coating on the hook portions and on the center which have contact on the casing 1.

The hook portions 82a and 82b can be mounted on the casing by enlarging their spacing a little. The mounting operation of holder 82 is very easy and it can be stably secured on the casing during transport and storage preventing unexpected throw out of the tension member.

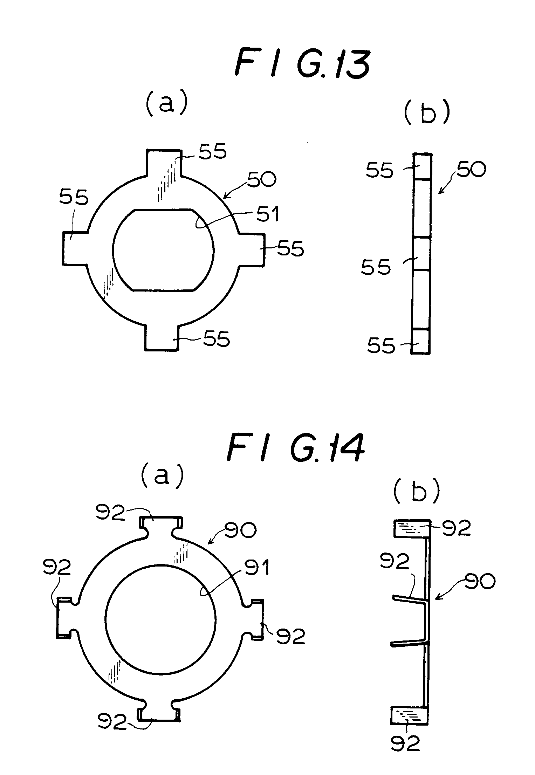

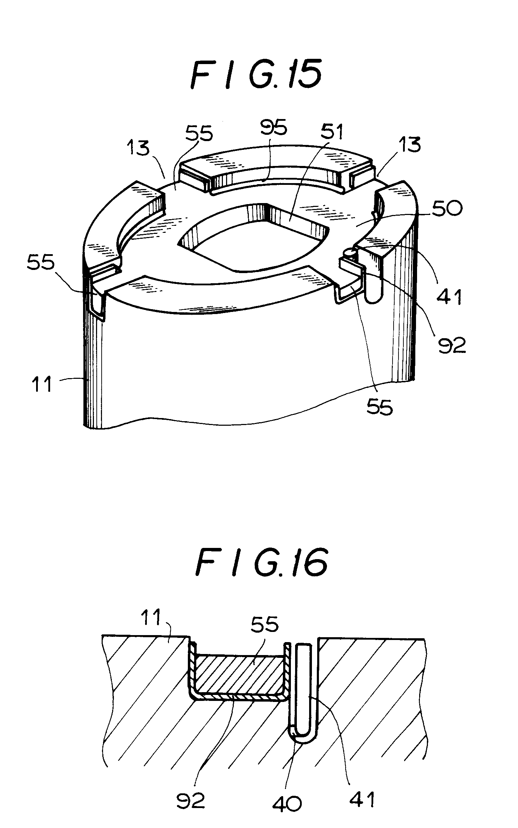

Further, a spacer 90 is mounted between the bearing 50 and the casing 11, which is made of hard and resistent material. The bearing 50 has a non-circular hole 51 and four ear type protrusions 55. The spacer 90 is of ring form having 4 ear type protrusions 92 at the angular difference of 90°, of which both sides are folded upward as shown in the Figure 14. Figure 15 shows a perspective view of bearing 50 mounted on the end of casing 11. The ear type protrusions 92 fit in the slits 13 formed on the end of casing 11. In this case, the direct contact between the casing 11 and the protrusions 55 can be prevented by the spacer 90. Even though a rotational force of rotational member 20 is transmitted to the tension member 30 and to the protrusions 55 of bearing 50, the pressure applied by the protrusions 55 is received by the folded portions of spacer 90 preventing unnecessary wear of ear type protrusions 55 of bearing 50. It means that it is not necessary to make the casing with hard and resistent materials, but it may be made of light materials such as aluminum, aluminum alloy or synthetic resins, permitting the reduction of weight and a wide selection of material. Numeral 95 shows a ring groove for the snap ring 60.

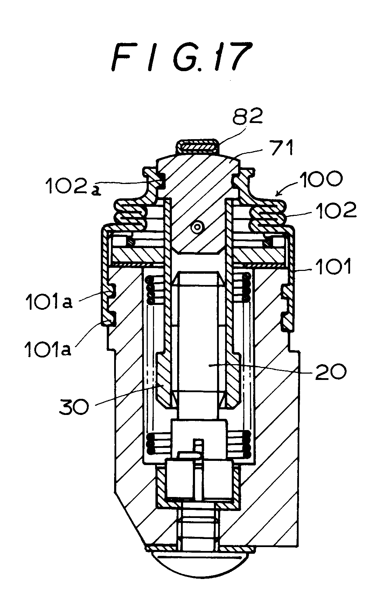

Figure 17 shows another embodiment according to the present invention, where there is shown a cover 100 comprising a cover 101 and a boot 102 corresponding to the boot 62 and the cover 61 shown in the Figure 8 and made of an elastic material rubber. The cover portion has two inner ring-like projections 101a fitted on the casing and the front end of boot 102 has an inner ring-like projection 102a for sealing the device. In this case, it is easier to make a one piece cover like this than the separate boot 62 and separate cover 61 in the Figure 8.

The seal bolt 67 may be substituted with other elastic components having a ring type rib made of rubber. In this case, the threaded portion on the casing 11 can be dispensed with, making the fabrication process easier.

The tensioner according to the present invention is of a short length as explained above, but has sufficient stroke equivalent to a conventional tensioner, permitting the reduction of dimension.

## Claims

1. A tensioner for a chain, a belt or the like comprising a casing (11), a tension member (30) threadedly engaged with a rotational member (20) and extending through a non-circular bearing (50) in said casing, a torsion spring (40) to urge the rotation of said rotational member (20) and thereby urge the tension member (30) outwardly of said casing, and externally surrounding said rotational member (20), there being a zone surrounded by the torsion spring where the tension and rotation members are threadedly engaged when the tension member is withdrawn into the housing, the exterior of the tension member (30) being of non-circular form corresponding to the non-circular form of said bearing (50), characterised in that a male thread on the rotational member (20) engages with a female thread in the tension member (30), and in that the non-circular form of the tension member (30) extends substantially throughout its length, so that the available stroke of the tension member through the bearing may be substantially as much as the length of the tension member within the housing when the tension member is withdrawn into the housing, and in that the tension member is substantially removed from the said zone when it is fully extended from the housing.

2. A tensioner according to claim 1, characterised by a cylindrical collar (70) for separating said torsion spring from said tension member.

3. A tensioner according to claim 1 or 2 wherein said bearing (50) is reinforced by a spacer (92) so as not to damage slit walls formed on the opening end of said casing.

4. A tensioner according to claim 1, 2 or 3 characterised by a rear bearing (80) for the rotational member (20) made of hard and resistant material having ribs for being pressed in the casing so that the casing may be fabricated with soft and light materials.

5. A tensioner according to any preceding claim characterised by a stopper pin (68) detachably secured to the casing for locking the advancement of the tension member by constraining the rotation of said rotational member by inserting the stopper pin into a slit (24) on the rear end of the rotational member (20).

6. A tensioner according to any preceding claim wherein an attaching portion (52) of the bearing (50) is formed on the bearing so as to latch to the casing and a spacer (90) is located between the attaching portion and the casing.

7. A tensioner according to any preceding claim wherein a space between the tension member and the casing is covered with a cover (100) comprising a cover portion (101) self-fit on the casing and integrated with a boot portion (102) also self-fit on the head of the tension member.

8. A tensioner according to any preceding claim wherein the top portion of a holder positioned at the top of the tension member has a non-skid coating applied thereon.

## Patentansprüche

1. Spannvorrichtung für eine Kette, einen Riemen oder dergleichen, mit einem Gehäuse (11), einem Spannelement (30), welches über ein Gewinde mit einem Rotationselement (20) in Eingriff steht und sich durch ein nicht kreisförmiges Lagerelement (50) in diesem Gehäuse erstreckt, einer Torsionsfeder (40), die die Rotation des Rotationselements (20) bewirken und dadurch das Spannelement (30) aus dem Gehäuse hinausdrücken kann, und das Rotationselement (20) außen umgibt, wobei eine von der Torsionsfeder umgebene Zone vorhanden ist, in der die Spann- und Rotationselemente über ein Gewinde miteinander in Eingriff stehen, wenn das Spannelement in das Gehäuse zurückgezogen ist: wobei die Außenfläche des Spannelements (30) entsprechend der nicht kreisrunden Form des Lagerelements (50) eine Form aufweist, die nicht kreisförmig ist, **dadurch gekennzeichnet,** daß ein Außengewinde auf dem Rotationselement (20) mit einem Innengewinde in dem Spannelement (30) in Eingriff ist, und daß sich die nicht kreisrunde Form des Spannelements (30) im wesentlichen entlang seiner ganzen Länge erstreckt, so daß die zur Verfügung stehende Hublänge des Spannelements durch das Lagerelement im wesentlichen so lang sein kann wie die Länge des Spannelements innerhalb des Gehäuses, wenn das Spannelement in das Gehäuse zurückgezogen ist, und daß das Spannelement im wesentlichen aus dieser Zone entfernt ist, wenn es ganz aus dem Gehäuse ausgefahren ist.

2. Spannvorrichtung nach Anspruch 1, gekennzeichnet durch eine zylinderförmige Einfassung (70) zum Trennen der Torsionsfeder von dem Spannelement.

3. Spannvorrichtung nach Anspruch 1 oder 2, bei der das Lagerelement (50) durch ein Abstandsstück (92) verstärkt wird, um an dem offenen Ende des Gehäuses ausgebildete Schlitzwände nicht zu beschädigen.

4. Spannvorrichtung nach Anspruch 1, 2 oder 3, gekennzeichnet durch ein hinteres Lagerelement (80) für das Rotationselement (20), welches aus hartem und widerstandsfähigem Material hergestellt wird und Rippen zum Hineinpressen in das Gehäuse aufweist, so daß das Gehäuse aus weichen und leichten Materialien herstellbar ist.

5. Spannvorrichtung nach einem der vorhergehenden Ansprüche, gekennzeichnet durch einen Anschlagstift (68), der abnehmbar an dem Gehäuse angebracht ist, um eine Vorwärtsbewegung des Spannelements dadurch zu blockieren, daß die Drehung des Rotationselement eingeschränkt wird, indem man den Anschlagstift in einen Schlitz (24) an dem hinteren Ende des Rotationselements (20) einführt.

6. Spannvorrichtung nach einem der vorhergehenden Ansprüche, bei der ein Befestigungsabschnitt (52) des Lagerelements (50) auf dem Lagerelement ausgebildet ist, um an dem Gehäuse einzuschnappen, und bei der ein Abstandsstück (90) zwischen dem Befestigungsabschnitt und dem Gehäuse angeordnet ist.

7. Spannvorrichtung nach einem der vorhergehenden Ansprüche, bei der ein Raum zwischen dem Spannelement und dem Gehäuse mit einer Abdeckung (100) abgedeckt ist, die einen Abdeckabschnitt (101) umfaßt, der selbsttätig auf dem Gehäuse befestigt und mit einem Manschettenabschnitt (102) einstückig ausgebildet ist, der ebenfalls selbsttätig an dem Kopf des Spannelements befestigt ist.

8. Spannvorrichtung nach einem der vorhergehenden Ansprüche, bei der der obere Abschnitt einer oben an dem Spannelement angeordneten Halteeinrichtung mit einem rutschfesten belag versehen ist.

**Revendications**

1. Tendeur pour une chaîne, une courroie ou analogues, comportant un boîtier (11), un élément tendeur (30) solidaire par vissage avec un élément rotatif (20) et s'étendant à travers un palier non circulaire (50) dans ledit boîtier, un ressort de torsion (40) pour solliciter en rotation ledit élément rotatif (20) et repousser de la sorte l'élément tendeur (30) vers l'extérieur dudit boîtier, et entourant extérieurement ledit élément rotatif (20), une zone entourée par le ressort de torsion, dans laquelle les éléments tendeur et rotatif sont solidaires par vissage lorsque l'élément tendeur est rétracté à l'intérieur du boîtier, l'élément tendeur (30) ayant une forme extérieure non circulaire correspondant à la forme non circulaire dudit palier (50), caractérisé en ce qu'un filetage mâle prévu sur l'élément rotatif (20) est en prise avec un taraudage situé dans l'élément tendeur (30) et en ce que la forme non circulaire de l'élément tendeur (30) s'étend sensiblement sur toute sa longueur, de telle sorte que la course disponible de l'élément tendeur à travers le palier peut être sensiblement égale à la longueur de l'élément tendeur à l'intérieur du boîtier lorsque l'élément tendeur est rétracté à l'intérieur du boîtier et en ce que l'élément tendeur est sensiblement retiré de ladite zone lorsqu'il est en extension totale depuis le boîtier.

2. Tendeur selon la revendication 1, caractérisé en ce qu'il comporte une collerette cylindrique (70) pour séparer ledit ressort de torsion dudit élément tendeur.

3. Tendeur selon la revendication 1 ou 2, dans lequel ledit palier (50) est renforcé par une pièce d'écartement (92) de manière à ne pas endommager les parois de glissement formées sur l'extrémité d'ouverture dudit boîtier.

4. Tender selon la revendication 1, 2 or 3, caractérisé par un palier arrière (80) pour l'élément rotatif (20), constitué par un matériau dur et résistant comprenant des nervures prévues pour être pressées dans le boîtier de telle sorte que celui-ci peut être fabriqué en des matériaux mous et légers.

5. Tendeur selon l'une quelconque des revendications précédentes, caractérisé en ce qu'il comporte un goujon d'arrêt (68) fixé de manière détachable sur le boîtier pour bloquer l'avancement de l'élément tendeur en limitant la rotation dudit élément rotatif par l'insertion du goujon d'arrêt dans une fente (24) ménagée sur l'extrémité arrière de l'élément rotatif (20).

6. Tendeur selon l'une quelconque des revendications précédentes, dans lequel une partie d'attache (52) du palier (50) est formée sur le palier de manière à être verrouillée au boîtier et une pièce d'écartement (90) est logée entre la partie d'attache et le boîtier.

7. Tendeur selon l'une quelconque des revendications précédentes, dans lequel un espace ménagé entre l'élément tendeur et le boîtier est recouvert par un couvercle (100) comportant une partie de couvercle (101) auto-ajustée sur le boîtier et solidaire d'une partie formant capuchon (102) qui est aussi auto-ajustée sur la tête de l'élément tendeur.

8. Tendeur selon l'une quelconque des revendications précédentes, dans lequel la partie supérieure d'un support positionné sur le dessus de l'élément tendeur possède, appliqué sur elle, un revêtement anti-glissement.

# FIG.1

# FIG.2

# F I G. 3

68

# F I G. 4

(b)    (a)    (c)

32    33    30

31

31

32    33

31

# F I G. 5

# F I G. 6

(a)

(b)

# FIG. 7

(a)    (b)    (c)    (d)

33    33  33    33    33    33    33

31    31    31    31
30    30    33    30    33    33    33    31    30

# FIG. 8

(a)

82a

82

11a

82b    11    82b

67

(b)

82    a    b    71

62

60    50    90

61    41

81

20    85

30    11

40

42

80

67

# F I G. 9

(b)

80
80b
80a
80c

(a)

80b
80
80a
80c

# F I G. 10

(b)

82c
a

(a)

82a
82c
82
82b
82b

# F I G. 11

(b)

82d
a

(a)

82d
82
a
82b
82b

# F I G. 12

(b)

82e
a

(a)

82
82e
a
82e
82e
82b
82b

# F I G. 13

(a)

(b)

# F I G. 14

(a)

(b)

F I G.15

F I G.16

# F I G. 17

# F I G.18

(b)

80d 80
80d
80d
80b
80a
80c 80d

(a)

80b
80
80a
80c
80d

(c)

80d
80d
80

# F I G.19
## (PRIOR ART)

2 3 4b
6 4 8
7
5 1a 4a 1